# EUROPÄISCHE PATENTANMELDUNG

(11) **EP 2 853 874 A2**
(43) Veröffentlichungstag der Anmeldung: **01.04.2015**
(21) Anmeldenummer: 14179956.9
(22) Anmeldetag: 06.08.2014
(51) Int. Cl.: G01L 7/16

(54) **Vorrichtung zur Erfassung mindestens einer Eigenschaft eines fluiden Mediums**

(30) Priorität: 16.09.2013 DE 102013218479
(71) Anmelder: ROBERT BOSCH GMBH, 70442 Stuttgart (DE)
(72) Erfinder: Ott, Marcell, 89278 Nersingen (DE); Fessele, Thomas, 72202 Nagold (DE)

(57) **Zusammenfassung**

Vorgeschlagen wird eine Vorrichtung (110) zur Erfassung mindestens einer Eigenschaft eines fluiden Mediums in einem Messraum (112). Die Vorrichtung (110) umfasst mindestens ein Drucksensorelement (122) zur Erfassung eines Drucks des fluiden Mediums. Weiterhin umfasst die Vorrichtung (110) einen Druckstutzen (116) mit mindestens einer Druckbohrung (126) zur Zufuhr des fluiden Mediums zu dem Drucksensorelement (122). Das Drucksensorelement (122) ist mittels mindestens eines Trägerelements (124) gehalten und mit dem Druckstutzen (116) verbunden. Die Vorrichtung (110) ist dadurch gekennzeichnet, dass zwischen dem Trägerelement (124) und dem Druckstutzen (116) mindestens ein Drosselelement (134) formschlüssig eingebettet ist.

## Beschreibung

### Stand der Technik

Die Erfindung betrifft eine Vorrichtung zur Erfassung mindestens einer Eigenschaft eines fluiden Mediums mit den Merkmalen des unabhängigen Anspruchs.

Aus dem Stand der Technik ist eine Vielzahl von Sensoren zur Erfassung mindestens einer Eigenschaft eines fluiden Mediums in einem Messraum bekannt. Bei einem fluiden Medium kann es sich beispielsweise um ein Gas und/oder um eine Flüssigkeit handeln. Bei der mindestens einen Eigenschaft, welche qualitativ oder quantitativ erfasst werden kann, kann es sich um eine beliebige physikalische und/oder chemische Eigenschaft des fluiden Mediums oder einer Strömung des fluiden Mediums handeln. Insbesondere sind Sensoren bekannt, welche eingerichtet sind, um zumindest eine Temperatur des fluiden Mediums zu erfassen. Die Erfindung wird im Folgenden, ohne Beschränkung weiterer möglicher Ausgestaltungen, im Wesentlichen beschrieben unter Bezugnahme auf sogenannte Kombinationssensoren, welche neben einer Temperatur weiterhin einen Druck des fluiden Mediums erfassen können (p-T-Sensoren), auch Drucksensoren mit integriertem Temperatursensor genannt. Derartige Sensoren sind beispielsweise in Konrad Reif: Sensoren im Kraftfahrzeug, 2. Auflage 2012, Seiten 134-136, beschrieben.

Derartige p-T-Sensoren werden insbesondere in hydraulischen Systemen eingesetzt. Ein wichtiges Einsatzgebiet für p-T-Sensoren ist die Kraftfahrzeugtechnik, insbesondere in einem kraftstoffführendem System und/oder einem Ölkreislauf eines Kraftfahrzeugs. Beispielsweise bedingt der Einsatz alternativer Kraftstoffe, wie beispielsweise Erdgas (CNG, compressed natural gas), LPG (liquefied petroleum gas), Ethanol oder ähnlicher alternativer Kraftstoffe, den Einsatz angepasster Sensoren, um physikalische Größen wie Druck und Temperatur im Saugrohr oder im Kraftstoffsystem zu ermitteln. Beispielsweise ermöglichen sogenannte Mitteldrucksensoren eine Messung von Druck und Temperatur in einem mit ethanolhaltigem Kraftstoff betriebenen Motorsystem. Derartige p-T-Sensoren weisen üblicherweise ein Gehäuse auf, welches einen Druckstutzen mit einem Außengewinde aufweist und welches in das Kraftstoff- oder Ölsystem eingeschraubt werden kann. Auf den Druckstutzen ist ein Drucksensorelement aufgebracht, welches über eine Bohrung mit dem Kraftstoffsystem verbunden ist. Weiterhin ragt aus dem Druckstutzen ein Temperaturmessfinger in das fluide Medium, in welchem ein Temperaturfühler in Form eines NTC-Widerstands (Widerstand mit negativem Temperaturkoeffizienten) aufgenommen ist.

In Drucksensoren können beispielsweise durch eine Betätigung eines Ventils Änderungen der Strömungsgeschwindigkeit des fluiden Mediums auftreten. Insbesondere kann es hierbei zu schnellen Druckänderungen, sogenannten Druckschlägen, und Kavitationspulsen kommen, welche die Messelemente der Sensoren beschädigen können.

Für Drucksensoren ohne Temperatursensor ist aus dem Stand der Technik bekannt, zusätzliche Bauteile, sogenannte Drosselelemente, auch Drossel genannt, zu einer Querschnittsverringerung der Bohrung in Drucksensoren einzubauen um solche Schädigungen zu verhindern. Derartige Drosselelemente können eine Dynamik und Amplitude solcher unerwünschter Druckänderungen dämpfen.

Ein Drucksensor wird beispielsweise in DE 10 2006 051 192 B4 beschrieben. Der Drucksensor weist ein Gehäuse auf, welches eine Druckeinbringöffnung zum Einbringen eines zu messenden Mediums aufweist. Die Druckeinbringöffnung weist wenigstens eine nach Art einer Drossel wirkenden Stelle in Form eines Abschnitts verringerten Durchmessers auf, wo eine Querschnittsfläche der Druckeinbringöffnung verringert ist.

In WO 2004/042338 wird ein Relativdrucksensor mit zwei Kammern und zwei Trennmembranen für einen Prozessdruck und einen Umgebungsdruck beschrieben. Die Kammern sind durch ein druckempfindliches Element getrennt und mit einem Übertragungsmedium gefüllt. Zur Dämpfung von prozessseitigen Überlastungsimpulsen, die auf die erste Trennmembran wirken, ist eine hydraulische Drossel vorgesehen, die atmosphärenseitig zwischen der zweiten Trennmembran und dem druckempfindlichen Element angeordnet ist.

In US 8,117,920 B2 wird ein Begrenzungselement für einen Drucksensor vorgeschlagen, welcher ein Gehäuse mit einem Flüssigkeits-Einlasskanal und einem in einer Kammer angeordneten Druckelement aufweist. Innerhalb der Kammer und zwar zwischen dem Druckelement und dem Flüssigkeits-Einlasskanal ist ein Begrenzungselement angeordnet, um das Druckelement vor Strömungsbedingten Beschädigungen zu schützen.

Derartige Drosselelemente werden meist in einem Tiefziehprozess hergestellt. Bei einer Montage der Drosselelemente ist oftmals ein zusätzlicher Fertigungsschritt beispielsweise Schweißen oder Verstemmen nötig, um eine Verliersicherheit der Drosselelemente zu gewährleisten. Ein Verlust des Drosselelements während eines Betriebs des kraftstoffführenden Systems und/oder im Ölkreislauf des Kraftfahrzeugs kann zu einer Beschädigung des Kraftfahrzeugs, insbesondere einem Motorschaden, führen. Weiter sind für Drucksensoren mit integriertem Temperatursensor derartige zusätzliche Bauteile zur Dämpfung von Druckänderungen nicht bekannt.

### Offenbarung der Erfindung

Es wird daher eine Vorrichtung zur Erfassung mindestens einer Eigenschaft eines fluiden Mediums in einem Messraum vorgeschlagen, welches den oben dargestellten Stand der Technik in vorteilhafter Weise weiterentwickelt. Das fluide Medium kann grundsätzlich ein Gas und/oder eine Flüssigkeit sein. Bei der mindestens einen Eigenschaft kann es sich um eine beliebige physikalische und/oder chemische Eigenschaft des fluiden Mediums handeln, insbesondere kann die mindestens eine Eigenschaft der Druck des fluiden Mediums sein. Grundsätzlich ist unter einem Messraum ein das fluide Medium umfassender Raum zu verstehen. Die Erfindung kann insbesondere im Bereich der Kraftfahrzeugtechnik einsetzbar sein, sodass es sich bei dem Messraum beispielsweise um ein Saugrohr, ein Kraftstoff- oder ein Ölsystem, beispielsweise für einen Motor- und/oder Getriebeanbau, handeln kann.

Dementsprechend wird eine Vorrichtung vorgeschlagen, welche mindestens ein Drucksensorelement zur Erfassung eines Drucks des fluiden Mediums umfasst. Unter einem Drucksensorelement kann grundsätzlich ein Bauteil verstanden werden, welches eingerichtet ist eine physikalische Messgröße, wie beispielsweise den Druck eines Mediums, in ein elektrisches Signal, bevorzugt eine elektrische Spannung und/oder einen elektrischen Strom, umzuwandeln. Anders ausgedrückt, erzeugt das Drucksensorelement in Abhängigkeit eines auf ihn ausgeübten Druckes ein entsprechendes druckabhängiges Ausgangssignal, beispielsweise in Form einer Spannung und/oder eines Stromes. Weiterhin umfasst die Vorrichtung einen Druckstutzen mit mindestens einer Druckbohrung zur Zufuhr des fluiden Mediums zu dem Drucksensorelement. Unter einem Druckstutzen kann ein Bauteil verstanden werden, welches eingerichtet ist, das fluide Medium zu dem Drucksensorelement zu führen. Der Druckstutzen kann beispielsweise rotationssymmetrisch, beispielsweise in Form eines Hohlzylinders, ausgestaltet sein. Eine andere Ausgestaltung ist jedoch ebenfalls denkbar. Der Druckstutzen kann beispielsweise aus Stahl, Leichtmetall, Aluminium oder Messing, gefertigt sein. Durch die Druckbohrung kann das fluide Medium durch den Druckstutzen zu dem Drucksensorelement gelangen. Die Druckbohrung kann grundsätzlich eine Bohrung oder Öffnung mit einer beliebigen Querschnittsfläche sein, beispielsweise eine zylindrische Bohrung mit rundem oder polygonalem Querschnitt.

Das Drucksensorelement ist mittels mindestens eines Trägerelements gehalten und mit dem Druckstutzen verbunden. Unter einem Trägerelement kann ein Bauteil verstanden werden, welches eingerichtet ist, weitere Bauteile, insbesondere das Drucksensorelement, in der Vorrichtung zu halten. Der Begriff "gehalten" kann umfassen, dass das Trägerelement getrennt vom Drucksensorelement ausgebildet sein kann und das Drucksensorelement auf dem Trägerelement aufliegen und in der Vorrichtung gehalten werden kann, und/oder dass das Drucksensorelement ganz oder teilweise in dem Trägerelement integriert sein kann. Beispielsweise kann das Trägerelement als separates Bauteil ausgestaltet sein, unabhängig von dem Drucksensorelement. Alternativ kann das Trägerelement jedoch auch das Drucksensorelement auch ganz oder teilweise umfassen, beispielsweise als integralen Bestandteil. Beispielsweise kann das Drucksensorelement eine Membran umfassen, welche auf das Trägerelement aufgebracht ist, wobei das Trägerelement beispielsweise in Form eines Hohlzylinders oder Ringes ausgestaltet sein kann, dessen Öffnung ganz oder teilweise von der Membran überspannt oder bedeckt wird. Zusammenfassend kann die Ausgestaltung, dass das Drucksensorelement mittels mindestens eines Trägerelements gehalten wird und mit dem Druckstutzen verbunden ist, also dadurch realisiert werden, dass das Drucksensorelement und das Trägerelement als getrennte Elemente ausgestaltet sind, wobei das Trägerelement das Drucksensorelement räumlich positioniert und/oder fixiert, oder dadurch, dass das Drucksensorelement und das Trägerelement zumindest teilweise einstückig ausgebildet und/oder miteinander verbunden sind.

Beispielsweise kann das Trägerelement eine grundsätzlich beliebig geformte Auflage aufweisen, auf welchem das Drucksensorelement aufliegt. Das Trägerelement kann durch eine formschlüssige und/oder stoffschlüssige Verbindung mit dem Druckstutzen verbunden sein. Bevorzugt kann das Trägerelement ganz oder teilweise aus Kovar und/oder Stahl bestehen.

Zwischen dem Trägerelement und dem Druckstutzen ist mindestens ein Drosselelement formschlüssig eingebettet. Unter einem Drosselelement kann allgemein ein Element mit mindestens einem Drosselkanal verstanden werden, wobei der Drosselkanal einen geringeren Durchmesser oder Äquivalentdurchmesser als ein Druckkanal vor und nach dem Drosselelement aufweist. Unter einem Drosselkanal kann allgemein eine Bohrung oder Öffnung in dem Drosselelement verstanden werden, beispielsweise eine zylindrische Bohrung mit grundsätzlich beliebigem Querschnitt, durch welchen das fluide Medium in den Druckkanal hinter dem Drosselelement gelangen kann. Unter dem Druckkanal kann ein Kanal zwischen dem Messraum und dem Drucksensorelement verstanden werden. Der Druckkanal kann die Druckbohrung des Druckstutzens, den Drosselkanal und einen Trägerkanal umfassen. Die Druckbohrung des Druckstutzens kann, in einer Einströmrichtung des fluiden Mediums in die Vorrichtung, vor dem Drosselelement angeordnet sein. Der Trägerkanal kann als ein Kanalabschnitt zwischen dem Drosselelement und dem Drucksensorelement verstanden werden. Grundsätzlich kann das Drosselelement als ein Element mit einem höheren Strömungswiderstand als einem Strömungswiderstand von benachbarten Abschnitten des Druckkanals verstanden werden.

Weiterhin kann die Vorrichtung mindestens einen Temperatursensor zur Erfassung einer Temperatur des fluiden Mediums aufweisen. Bei dem Temperatursensor kann es sich beispielsweise um einen Heißleiter mit einem negativen Temperaturkoeffizienten (NTC) und/oder einen anderen temperaturabhängigen Widerstand handeln.

Der Temperatursensor kann zumindest teilweise in mindestens einem Temperaturfühlerkanal in dem Druckstutzen aufgenommen sein. Der Temperaturfühlerkanal kann eine Bohrung oder Öffnung in dem Druckstutzen sein, beispielsweise ein zylindrischer oder gekrümmter länglicher Hohlraum, welche beispielsweise schräg, insbesondere in einem Winkel, zu einer Einbauachse der Vorrichtung verläuft. Der Winkel zwischen dem Temperaturfühlerkanal und der Einbauachse kann beispielsweise zwischen 0 ° und 45 °, insbesondere zwischen 5 ° und 20 °, betragen. Die Einbauachse kann hierbei durch die Einbaurichtung der Vorrichtung in den Messraum definiert werden.

Der Temperatursensor kann zumindest teilweise in mindestens einem in das fluide Medium hineinragende Messfinger aufgenommen sein. Der Messfinger kann schräg zu der Einbauachse der Vorrichtung angeordnet sein. Weiterhin kann der Temperatursensor mindestens ein Temperatursensorelement aufweisen. Unter einem Messfinger kann allgemein ein Gehäuseelement verstanden werden, insbesondere ein endseitig geschlossenes Gehäuseelement, welches einen Innenraum aufweist, in dem mindestens ein Messelement aufnehmbar ist, und welches in den Messraum hineinragt. Dementsprechend kann der Messfinger ein Bereich des Druckstutzens sein, in welchem das Temperatursensorelement des Temperatursensors angeordnet ist und welcher in den Messraum hineinragt und welcher vorzugsweise an einem am weitesten in den Messraum hineinragenden Ende geschlossen ausgestaltet ist. Unter einem Temperatursensorelement kann, wie oben ausgeführt, grundsätzlich ein beliebiges Sensorelement zur Erfassung einer Temperatur verstanden werden, vorzugsweise ein temperaturabhängiger Widerstand, beispielsweise ein Heißleiter, dessen Widerstand mit zunehmender Temperatur sinkt. Das Temperatursensorelement kann insbesondere auf der Einbauachse der Vorrichtung angeordnet sein.

Der Temperatursensor kann Anschlussleitungen aufweisen. Weiterhin kann die Vorrichtung Anschlusskontakte zur Kontaktierung der Anschlussleitungen aufweisen. Die Anschlusskontakte können mit einer Auswerteelektronik verbundene Stecker-Kontaktstifte aufweisen.

Weiter kann die Druckbohrung des Druckstutzens schräg zu der Einbauachse der Vorrichtung verlaufen. Insbesondere kann die Druckbohrung unter gleichem Winkel zur Einbauachse wie der Messfinger und/oder der Temperaturfühlerkanal angeordnet sein.

Insbesondere kann die Vorrichtung ein Gehäuse aufweisen, wobei das Trägerelement das Drucksensorelement in dem Gehäuse halten kann, wobei das Gehäuse einen Elektronikraum umfassen kann, wobei der Drucksensor zumindest teilweise in dem Elektronikraum angeordnet sein kann. Das Gehäuse kann einen Gehäusekörper aufweisen. Der Gehäusekörper kann unabhängig von dem Druckstutzen als separates Bauteil gefertigt sein. Beispielsweise kann der Gehäusekörper als von dem Druckstutzen getrenntes Bauteil ausgestaltet sein, wobei optional zwischen dem Druckstutzen und dem Gehäusekörper mindestens ein Zwischenelement, beispielsweise als Koppler, vorgesehen sein kann. Beispielsweise kann zwischen dem Druckstutzen und dem Gehäusekörper mindestens ein Basiselement angeordnet sein, welches unten noch näher beschrieben wird. Beispielsweise kann dieses Basiselement mindestens eine Basisplatte und/oder mindestens einen Sechskant umfassen. Das Basiselement kann auch ganz oder teilweise einstückig mit dem Druckstutzen ausgestaltet sein. Alternativ zu einer getrennten Ausgestaltung des Gehäusekörpers und des Druckstutzens sind jedoch auch andere Ausgestaltungen möglich. So kann der Gehäusekörper beispielsweise auch ganz oder teilweise gemeinsam oder einstückig mit dem Druckstutzen gefertigt sein, beispielsweise aus Stahl und/oder Leichtmetall. Bevorzugt ist jedoch eine getrennte Ausbildung dieser Komponenten, da dies grundsätzlich die Aufnahme des Drucksensorelements und/oder einer Elektronik, beispielsweise einer Ansteuer- und/oder Auswerteelektronik, in dem Gehäusekörper und/oder der aus dem Gehäusekörper und dem Druckstutzen gebildeten Gesamtheit erleichtert.

Das Gehäuse, insbesondere der Gehäusekörper, können insbesondere das Drucksensorelement ganz oder teilweise aufnehmen. Das Gehäuse kann, wie oben ausgeführt, insbesondere ganz oder teilweise aus Stahl und/oder Leichtmetall ausgestaltet sein. Auch andere Ausgestaltungen sind jedoch möglich, beispielsweise eine Ausgestaltung, bei welcher der Gehäusekörper ganz oder teilweise aus einem Kunststoffmaterial gefertigt ist.

Der Elektronikraum kann beispielsweise eine mögliche Auswerteelektronik umfassen, welche beispielsweise eingerichtet sein kann, das druckabhängige Ausgangssignal des Drucksensorelements und/oder ein Signal des Temperatursensorelements auszuwerten. Bevorzugt sollte der Elektronikraum gegenüber dem fluiden Medium abgedichtet sein.

Zwischen dem Druckstutzen und dem Gehäuse kann mindestens ein Basiselement angeordnet sein kann, insbesondere ein plattenförmiges Basiselement, vorzugsweise ein Basiselement mit einer Außenkontur zum Ansatz eines Werkzeugs und besonders bevorzugt ein Basiselement mit einem Außensechskant. Unter einem Basiselement kann grundsätzlich ein Bauteil verstanden werden, mit welchem die Vorrichtung in dem Messraum befestigt werden kann. Weiterhin kann der Druckstutzen mindestens ein Außengewinde aufweisen. Bevorzugt kann das Basiselement auf mit dem Druckstutzen formschlüssig und/oder stoffschlüssig verbunden sein, um die Vorrichtung in dem Messraum zu befestigen. Weiterhin können das Basiselement und der Druckstutzen auch, wie oben ausgeführt, einteilig gestaltet sein.

Bevorzugt kann das Drosselelement als separates Bauteil ausgebildet sein. Unter einem separaten Bauteil ist ein Bauteil zu verstehen, welches in einem von einem Herstellungsprozess des Gehäuses, des Drucksensorelementes, des Trägerelementes und/oder Druckstutzen unabhängigen Herstellungsprozesses herstellbar ist und/oder einzeln in die Vorrichtung anzuordnen ist. Beispielsweise kann das Drosselelement als scheibenförmiges Bauteil und/oder als zylindrisches Bauteil ausgestaltet sein. Auch eine andere Ausgestaltung ist möglich. Das Drosselelement kann zumindest teilweise durch einen Stanzprozess herstellbar sein.

Alternativ oder zusätzlich kann das Drosselelement zumindest teilweise aus einem Sintermaterial hergestellt sein, insbesondere einem porösen Sintermaterial. Unter zumindest teilweise aus einem Sintermaterial kann verstanden werden, dass Teile des Drosselelements aus einem nichtmetallischen, insbesondere aus einem keramischen Material und/oder einem Kunststoffmaterial hergestellt sind. Beispielsweise kann das Drosselelement zumindest teilweise aus einem keramischen Material hergestellt sein. Unter einem porösen Sintermaterial kann ein Sintermaterial verstanden werden, welches Poren und insbesondere eine schwammartige oder siebartige Struktur aufweist.

Bevorzugt kann das Drosselelement zwischen dem Druckstutzen und dem Trägerelement geklemmt sein. Zwischen dem Druckstutzen und dem Trägerelement kann mindestens ein Hohlraum ausgebildet sein, wobei das Drosselelement ganz oder teilweise in den Hohlraum eingebracht werden kann. Dieses Einbringen kann beispielsweise derart ausgestaltet sein, dass das Drosselelement nicht fest mit dem Druckstutzen und/oder dem Trägerelement verbunden ist, also beispielsweise ohne eine stoffschlüssige Verbindung zwischen dem Drosselelement einerseits und dem Trägerelement und/oder dem Druckstutzen andererseits. Dabei kann durch das Trägerelement und den Druckstutzen eine Klemmkraft auf das Drosselelement ausgeübt werden, oder das Drosselelement kann lose in den Hohlraum eingelegt sein, ohne dass eine Klemmkraft auf dieses wirkt.

Der Druckstutzen kann mindestens eine ringförmige, die Druckbohrung umschließende Auflagefläche aufweisen, wobei das Trägerelement auf der Auflagefläche aufsitzen kann. Unter einer Auflagefläche kann grundsätzlich eine beliebig geformte Fläche verstanden werden, insbesondere eine zu der Einbauachse senkrecht verlaufende ringförmige Fläche, auf der das Trägerelement aufsitzen kann. Das Trägerelement kann insbesondere mit dem Druckstutzen verschweißt und/oder verbördelt sein.

In einer bevorzugten Ausführungsform kann der Druckstutzen einem dem Trägerelement zugewandten ringförmigen Vorsprung aufweisen, wobei das Drosselelement auf dem ringförmigen Vorsprung aufsitzen kann. Das Drosselelement kann umfangseitig bündig mit dem ringförmigen Vorsprung abschließen.

In einer weiteren bevorzugten Ausführungsform kann der Druckstutzen mindestens eine dem Trägerelement zuweisende Vertiefung aufweisen, wobei das Drosselelement zumindest teilweise in die Vertiefung eingelassen werden kann.

Eine Form und Länge des Druckstutzens, insbesondere des Hohlraums zwischen Druckstutzen und Trägerelement, kann eine Geometrie und Größe des Drosselelements festlegen. Das Drosselelement kann mindestens einen Drosselkanal aufweisen. Insbesondere kann das Drosselelement mindestens zwei Drosselkanäle aufweisen. Bei einer Ausführungsform mit mehr als einem Drosselkanal, beispielsweise mit zwei Drosselkanälen, kann eine Verstopfung des Drosselelements verhindert werden.

Der Drosselkanal kann insbesondere ausgewählt sein aus der Gruppe bestehend aus: einem geraden Drosselkanal; einem schrägen Drosselkanal; einem zumindest abschnittsweise konischen Drosselkanal; einem sich zum Drucksensorelement hin aufweitenden Drosselkanal; ein in das Medium in einem rechten Winkel umlenkenden Drosselkanal; und einem zumindest abschnittsweise senkrecht zu einer Achse Druckbohrung verlaufenden Drosselkanal. Unter einem geraden Drosselkanal kann ein axial verlaufender Drosselkanal verstanden werden. Unter einem schrägen Drosselkanal kann ein unter einem Winkel zwischen 0 ° und 90 °zu der Einbauachse verlaufender Drosselkanal verstanden werden. Der das Medium in einem rechten Winkel umlenkende Drosselkanal kann eingerichtet sein, dass auftretende Druckpulse nicht direkt auf das Drucksensorelement auftreffen und zusätzlich die Länge des Druckkanals verlängern. Die Druckpulse können umso stärker gedämpft werden desto länger der Drosselkanal, desto stärker die Umlenkung und desto geringer der Querschnitt ist.

Weiter kann eine Querschnittsverringerung des Druckkanals eine Dynamik und eine Amplitude von auftretenden Druckpulsen dämpfen. Bevorzugt können eine Länge, ein Querschnitt und ein Verlauf des Drosselkanals ausführbar sein. Beispielsweise können Druckpulse umso stärker gedämpft werden desto mehr der Querschnitt des Druckkanals verringert wird.

Das Drucksensorelement kann einen Drucksensorchip umfassen. Unter einem Drucksensorchip ist allgemein ein Bauteil zu verstehen, welches zur Umwandlung einer physikalischen Messgröße, beispielsweise des Druckes des fluiden Mediums, in bevorzugt einen elektrischen Strom und/oder eine elektrische Spannung eingesetzt werden kann. Der Drucksensorchip kann insbesondere ein piezoresistiver oder kapazitiver Drucksensorchip sein. Beispielsweise kann der Drucksensorchip mit der Auswerteelektronik verbunden sein, welche beispielsweise die vom Drucksensorchip als Ausgangssignal bereitgestellte elektrische Spannung oder den elektrischen Strom auswerten kann.

### Vorteile der Erfindung

Die vorgeschlagene Vorrichtung zur Erfassung mindestens einer Eigenschaft des fluiden Mediums in einem Messraum kann durch die Anordnung des Drosselelements innerhalb der Vorrichtung zwischen dem Trägerelement und dem Druckstutzen besonders vorteilhaft sein. Insbesondere kann so eine Verliersicherheit des Bauteils gewährleistet werden ohne einen zusätzlichen Fertigungsprozess, beispielsweise ein Schweiß- und/oder Bördelprozess. Dadurch können Kosten bei einem Herstellungsprozess der Vorrichtung eingespart werden. Weiter kann durch die Anordnung des Drosselelements innerhalb der Vorrichtung und/oder durch eine modulare Drosselgeometrie eine Verringerung einer Verstopfungsgefahr des Drosselements erzielt werden, beispielsweise indem das Drosselelement als Scheibe ausgestaltet wird, beispielsweise als Scheibe mit einem oder mehreren Löchern, einer Siebstruktur oder einer schwammartigen Struktur. Weiterhin kann eine Beschädigung des Drosselelements bei Transport und/oder Verbau der Vorrichtung in einem Kraftfahrzeug zumindest weitgehend verhindert werden. Zudem ist im Rahmen der vorliegenden Erfindung erstmalig der effiziente Einsatz eines Drosselelements in einem kombinierten Druck-Temperatur-Sensor möglich.

Weiter können durch die vorgeschlagene formschlüssige Einbettung des Drosselelements auch nichtmetallische Materialien, insbesondere keramische und/oder Kunststoffmaterialien für das Drosselelement verwendet werden. Die Einbettung des Drosselelements in der Nähe des Drucksensorelements kann eine Beschädigung und/oder Zerstörung des Drucksensorelements verhindern.

Die Ausgestaltung des Drosselelements als separates Bauteil kann eine Flexibilität bezüglich Kundenanforderungen ermöglichen. Kundenanforderungen bezüglich der Länge des Querschnitts und des Verlaufs des Drosselkanals können leicht realisiert werden und so einen Einbau der Vorrichtung an verschiedenen Orten des Kraftfahrzeugs, mit verschiedenen Dichten und Zusammensetzungen des fluiden Mediums, ermöglichen. Die Herstellbarkeit des Drosselelements als separates, scheibenförmiges Bauteil durch einen Stanzprozess kann im Vergleich zu üblichen Herstellungsverfahren aus dem Stand der Technik durch Stanz- und Tiefziehprozesse zu einer Kostenersparnis führen.

### Kurze Beschreibung der Zeichnungen

Bevorzugte Ausführungsformen der Erfindung sind in den Zeichnungen dargestellt und in der nachfolgenden Beschreibung näher erläutert. Es zeigen:
- Figur 1 A und 1 B: eine bevorzugte Ausführungsform der erfindungsgemäßen Vorrichtung mit einem erfindungsgemäßen Drosselelement;
- Figur 2 A und 2: B eine formschlüssige Einbettung des Drosselelements zwischen einem Trägerelement und einem Druckstutzen; und
- Figuren 3 A bis G: mögliche Ausführungsformen des Drosselelements.

### Ausführungsformen der Erfindung

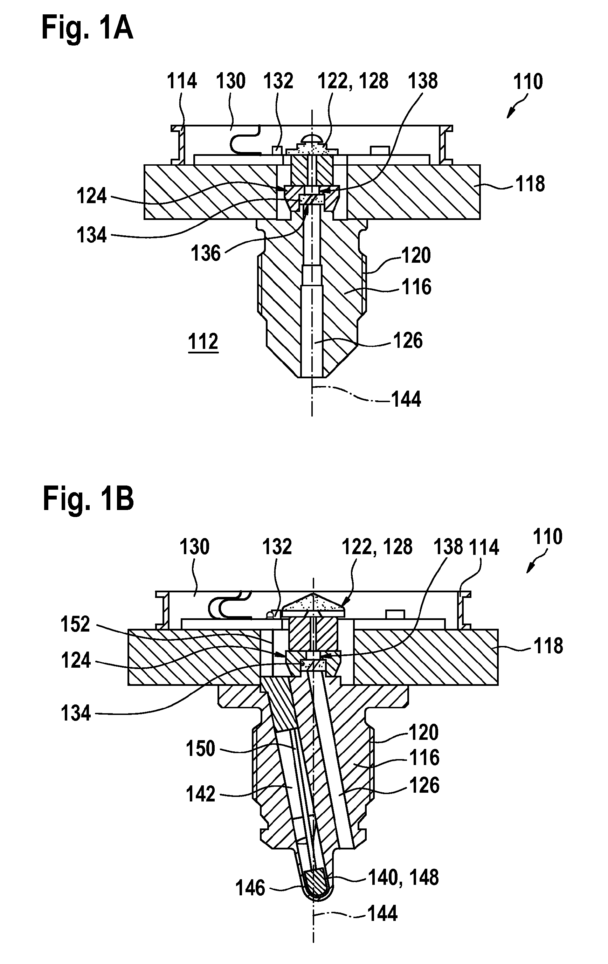

In Figur 1A ist eine bevorzugte Ausführungsform der erfindungsgemäßen Vorrichtung 110 zum Erfassen mindestens einer Eigenschaft eines fluiden Mediums in einem Messraum 112 gezeigt. Die Vorrichtung 110 kann ein Gehäuse 114 aufweisen. Weiter kann die Vorrichtung 110 einen Druckstutzen 116 aufweisen. Das Gehäuse 114 kann insbesondere unabhängig von dem Druckstutzen 116 gefertigt sein. Die Vorrichtung 110 kann in den Messraum 112 eingebracht werden und mit einem Basiselement 118, welches zwischen dem Gehäuse 114 und dem Druckstutzen 116 angeordnet werden kann, in dem Messraum 112 befestigt werden. Das Basiselement 118 kann optional, wie oben ausgeführt, einstückig mit dem Druckstutzen 116 ausgestaltet sein, beispielsweise aus Stahl. Das Basiselement 118 kann vorzugsweise eine Außenkontur zum Ansatz eines Werkzeugs aufweisen, insbesondere ein Außensechskant. Der Druckstutzen 116 kann mindestens ein Außengewinde 120 aufweisen, in welches das Basiselement 118 eingeschraubt werden kann.

Die Vorrichtung 110 weist mindestens ein Drucksensorelement 122 zur Erfassung eines Drucks des fluiden Mediums auf, welches mittels mindestens eines Trägerelements 124 in dem Gehäuse 114 gehalten werden kann. Der Druckstutzen 116 kann mindestens eine Druckbohrung 126 aufweisen durch welche das fluide Medium dem Drucksensorelement 122 zugeführt werden kann. Das Drucksensorelement 122 kann einen Drucksensorchip 128 umfassen, welcher beispielsweise ein piezoresistiver Drucksensorchip sein kann.

Das Drucksensorelement 122 kann weiterhin zumindest teilweise in einem Elektronikraum 130 des Gehäuses 114 angeordnet sein. Beispielsweise kann eine Auswerteelektronik 132 in dem Elektronikraum 130 angeordnet sein, welche beispielsweise eingerichtet sein kann ein druckabhängiges Ausgangssignal des Drucksensorelements 122 auszuwerten.

Die Vorrichtung 110 weist mindestens ein Drosselelement 134 auf, welches formschlüssig zwischen dem Trägerelement 124 und dem Druckstutzen 116 eingebettet ist. Das Drosselelement 134 kann mindestens einen Drosselkanal 136 aufweisen. Der Drosselkanal 136 kann einen kleineren Durchmesser und/oder Äquivalentdurchmesser aufweisen als ein Durchmesser der Druckbohrung 126 und als ein Durchmesser eines Trägerkanals 138. Der Trägerkanal 138 kann ein Kanal zwischen dem Messraum 112 und dem Drucksensorelement 122 sein. Das Drosselelement 134 kann eingerichtet sein Druckpulse, welche durch Veränderungen des Druckes des fluiden Mediums auftreten, zu dämpfen und so das Drucksensorelement 122 vor Beschädigungen zu schützen.

Figur 1B zeigt eine weitere bevorzugte Ausführungsform der erfindungsgemäßen Vorrichtung 110, in welcher die Vorrichtung 110 ein Drucksensorelement 122 und einen Temperatursensor 140 aufweisen kann. Der Temperatursensor 140 kann eingerichtet sein eine Temperatur des fluiden Mediums zu erfassen. Der Druckstutzen 116 kann einen Temperaturfühlerkanal 142 aufweisen, in welche der Temperatursensor 140 zumindest teilweise aufgenommen sein kann. Der Temperaturfühlerkanal 142 kann schräg, insbesondere in einem Winkel zu einer Einbauachse 144 der Vorrichtung 110 verlaufen. Beispielsweise kann der Winkel zwischen dem Temperaturfühlerkanal 142 und der Einbauachse 144 zwischen 0 °und 45 °, insbesondere zwischen 5 °und 20 ° betragen.

Der Temperatursensor 140 kann beispielsweise als ein Heißleiter (NTC) und/oder ein anderer temperaturabhängiger Widerstand ausgestaltet sein. Bevorzugt kann der Temperatursensor 140 zumindest teilweise in mindestens einem in das fluide Medium hineinragende Messfinger 146 aufgenommen sein. Der Temperatursensor 140 kann ein Temperatursensorelement 148 umfassen, welches auf der Einbauachse 144 der Vorrichtung 110 angeordnet sein kann. Der Temperatursensor 140 kann weiterhin Anschlussleitungen 150 aufweisen, mit welchen die Auswerteelektronik 132 durch Anschlusskontakte 152 verbunden sein kann. Die Anschlusskontakte 152 können beispielsweise als Steckerkontaktstifte und/oder als Kontaktstifte ausgestaltet sein.

Weiter zeigt Figur 1B eine Ausführungsform bei der die Druckbohrung 126 schräg zu der Einbauachse 144 der Vorrichtung 110 verlaufen kann. Beispielsweise kann die Druckbohrung 126 unter einem gleichen Winkel zur Einbauachse 144 verlaufen wie der Messfinger 146 und/oder der Temperaturfühlerkanal 142.

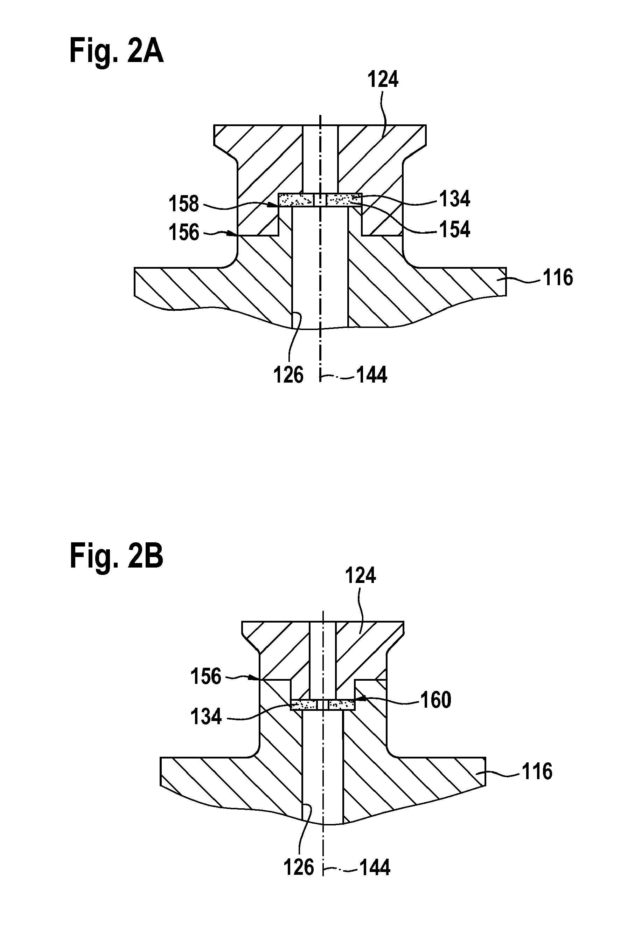

In Figur 2A und 2B werden zwei bevorzugte Ausführungsbeispiele der erfindungsgemäßen Einbettung des Drosselelements 134 dargestellt. Zwischen dem Druckstutzen 116 und dem Trägerelement 124 kann mindestens ein Hohlraum 154 ausgebildet sein, in welchen das Drosselelement 134 eingebettet werden kann. Das Trägerelement 124 kann auf einer ringförmigen, die Druckbohrung 126 umschließende Auflagefläche 156 aufsitzen. In Figur 2A kann der Druckstutzen 116 einen dem Trägerelement 124 zuweisenden ringförmigen Vorsprung 158 aufweisen. Das Drosselelement 134 kann auf dem ringförmigen Vorsprung 158 aufsitzen und zwischen dem Druckstutzen 116 und dem Trägerelement 124 geklemmt sein. Das Trägerelement 124 kann insbesondere mit dem Druckstutzen 116 verschweißt sein.

In Figur 2B ist ein Ausführungsbeispiel dargestellt, bei welchem der Druckstutzen 116 eine dem Trägerelement 124 zuweisende Vertiefung 160 aufweisen kann. Das Drosselelement 134 kann zumindest teilweise in die Vertiefung 160 eingelassen sein. Durch die formschlüssige Einbettung des Drosselelements 134 zwischen dem Druckstutzen 116 und dem Trägerelement 124 kann eine Verliersicherheit des Drosselelements 134 gewährleistet sein.

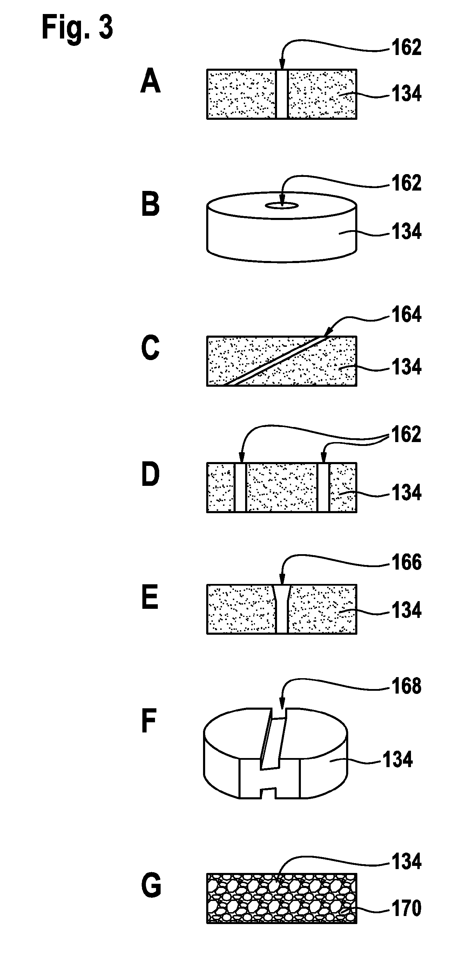

Mögliche Ausgestaltungen des Drosselelements 134 werden in den Figuren 3A - 3G gezeigt. Das Drosselelement 134 kann bevorzugt als ein separates Bauteil ausgebildet sein. Beispielsweise kann das Drosselelement 134 als ein scheibenförmiges Bauteil ausgestaltet sein, insbesondere als ein zylindrisches Bauteil. Auch andere Ausgestaltungen sind möglich. In Figur 3A ist ein Drosselelement 134 gezeigt, welches einen geraden Drosselkanal 162 aufweist. In Figur 3B ist eine dreidimensionale Darstellung dieser Ausführungsform gezeigt. Beispielsweise kann ein Durchmesser des geraden Drosselkanals 162 0,2 mm betragen.

Das Drosselelement 134 kann weiterhin als ein Drosselelement 134 mit einem schrägen Drosselkanal 164, Figur 2C, einem zumindest abschnittsweise konischen Drosselkanal 166, welcher sich beispielsweise zum Drucksensorelement 122 hin aufweiten kann, Figur 3E, ausgestaltet sein. Figur 3F zeigt ein Drosselelement 134 mit einem zumindest abschnittsweise senkrecht zu einer Achse der Druckbohrung 126 verlaufenden Drosselkanal 168. Bei einer Verwendung eines Drosselelements 134 mit einem schrägen Drosselkanal 164 und einem senkrecht zu einer Achse der Druckbohrung 126 verlaufenden Drosselkanals 168 können auftretende Druckpulse nicht direkt auf das Drucksensorelement 122 auftreffen und so eine Beschädigung des Drucksensorelements 122 verhindert werden.

Weiter kann das Drosselelement 134 mindestens zwei Drosselkanäle aufweisen, dargestellt in Figur 3D. Insbesondere kann das Drosselelement 134 zwei gerade Drosselkanäle 162 aufweisen. Bei einer Ausführungsform des Drosselelements 134 mit mehr als einem Drosselkanal 136 kann eine Verstopfung des Drosselelements 134 verhindert werden.

Figur 3G zeigt ein Drosselelement 134, welches zumindest teilweise aus einem Sintermaterial hergestellt ist, insbesondere einem porösen Sintermaterial. Beispielsweise kann das Drosselelement 134 zumindest teilweise aus einem keramischen Material hergestellt sein. In dieser Ausführungsform kann das Drosselelement 134 viele poröse schwammartige oder siebartige Kanäle 170 aufweisen durch welche auftretende Druckpulse gedämpft werden können. Eine Ausgestaltung des Drosselelements 134 aus nichtmetallischen Material ist insbesondere durch die formschlüssige Befestigung des Drosselelements 134 zwischen dem Druckstutzen 116 und dem Trägerelement 124 möglich.

## Patentansprüche

1. Vorrichtung (110) zur Erfassung mindestens einer Eigenschaft eines fluiden Mediums in einem Messraum (112), umfassend mindestens ein Drucksensorelement (122) zur Erfassung eines Drucks des fluiden Mediums, weiterhin umfassend einen Druckstutzen (116) mit mindestens einer Druckbohrung (126) zur Zufuhr des fluiden Mediums zu dem Drucksensorelement (122), wobei das Drucksensorelement (122) mittels mindestens eines Trägerelements (124) gehalten und mit dem Druckstutzen (116) verbunden ist, **dadurch gekennzeichnet, dass** zwischen dem Trägerelement (124) und dem Druckstutzen (116) mindestens ein Drosselelement (134) formschlüssig eingebettet ist.

2. Vorrichtung (110) nach dem vorhergehenden Anspruch, wobei die Vorrichtung (110) weiterhin mindestens einen Temperatursensor (140) zur Erfassung einer Temperatur des fluiden Mediums aufweist, wobei der Temperatursensor (140) zumindest teilweise in mindestens einem Temperaturfühlerkanal (142) in dem Druckstutzen (116) aufgenommen ist.

3. Vorrichtung (110) nach dem vorhergehenden Anspruch, wobei der Temperatursensor (140) zumindest teilweise in mindestens einem in das fluide Medium hineinragenden Messfinger (146) aufgenommen ist.

4. Vorrichtung (110) nach einem der vorhergehenden Ansprüche, wobei das Drosselelement (134) als separates Bauteil ausgebildet ist.

5. Vorrichtung (110) nach einem der vorhergehenden Ansprüche, wobei das Drosselelement (134) als scheibenförmiges Bauteil ausgestaltet ist, insbesondere als zylindrisches Bauteil.

6. Vorrichtung (110) nach einem der vorhergehenden Ansprüche, wobei das Drosselelement (134) zumindest teilweise aus einem Sintermaterial hergestellt ist, insbesondere einem porösen Sintermaterial.

7. Vorrichtung (110) nach einem der vorhergehenden Ansprüche, wobei das Drosselelement (134) zumindest teilweise aus einem keramischen Material hergestellt ist.

8. Vorrichtung (110) nach einem der vorhergehenden Ansprüche, wobei das Drosselelement (134) zwischen dem Druckstutzen (116) und dem Trägerelement (124) geklemmt ist.

9. Vorrichtung (110) nach einem der vorhergehenden Ansprüche, wobei zwischen dem Druckstutzen (116) und dem Trägerelement (124) mindestens ein Hohlraum (154) ausgebildet ist, wobei das Drosselelement (134) zumindest teilweise in den Hohlraum (154) eingebracht ist.

10. Vorrichtung (110) nach einem der vorhergehenden Ansprüche, wobei der Druckstutzen (116) mindestens eine dem Trägerelement (124) zuweisende Vertiefung (160) aufweist, wobei das Drosselelement (134) zumindest teilweise in die Vertiefung (160) eingelassen ist.
